# EUROPEAN PATENT SPECIFICATION

(11) **EP 1 454 771 B1**
(45) Date of publication and mention of the grant of the patent: **14.12.2011**
(21) Application number: 04005206.0
(22) Date of filing: 04.03.2004
(51) Int. Cl.: B60C 23/04

(54) **Electronics device for a tire having an extensible antenna and a tire having such a device**
Elektronische Vorrichtung für einen Reifen mit einer dehnbaren Antenne und ein Reifen mit solch einer Vorrichtung
Dispositif électronique pour un pneumatique avec une antenne elastique et un pneumatique comportant ce dispositif

(30) Priority: 04.03.2003 EP 03290517
(43) Date of publication of application: 08.09.2004
(73) Proprietor: Société de Technologie Michelin, 63000 Clermont-Ferrand (FR); Michelin Recherche et Technique S.A., 1763 Granges-Paccot (CH)
(72) Inventor: Myatt, David, Pompignat 63119 Chateaugay (FR)
(74) Representative: Dequire, Philippe Jean-Marie Denis

(56) References cited:
- EP-A- 1 223 057
- EP-A2- 1 983 604
- WO-A-01/36221
- WO-A-99/29522
- WO-A-99/29523
- WO-A-99/29525
- WO-A-03/041974
- US-A- 6 062 072
- US-A1- 2003 132 893

## Description

### BACKGROUND AND SUMMARY

Electronic devices integrated in a tire can provide functions such as identification and tracking during manufacture, distribution, and use, and measurement of physical parameters such as pressure and temperature during use of the tire. Many systems utilize radio frequency communication between the tire and the external monitoring or interrogating device. A radio frequency communication link requires one or more antennas.

An electronic device and antenna that is securely attached to a tire structure, for example, by being embedded in the elastomeric material of the tire or attached by means of an elastomeric patch that is bonded to the tire, is desirable. Such mounting or attachment provides permanent, tamper-proof integration of the device with the tire. Integrating an antenna in the tire, however, presents difficulties. A tire undergoes flexing and distortions during normal use that can cause the antenna to fracture or separate from the electronics device. Further, if the electronics device and antenna are to be integrated with the tire during manufacture and before curing of the tire, the manufacturing process includes many steps, such as shaping and curing, that could cause the wire to break.

Late published document EP1983604 A2 shows an electronic communication device for a tire of a vehicle, comprising a radio device for communicating information from the tire to a remote radio receiver, and at least an antenna wire connected to and extending from said radio device, the antenna wire is formed with a plurality of helical turns, wherein the antenna wire is coated with an electrically insulating material to isolate it from the tire rubber.

WO99/29523 discloses an electronic communication device for a tire of a vehicle, wherein a helical antenna is placed between two non conductive rubber layers.

According to the invention there is provided an improved electronic communication device for a tire of a vehicle with the features of claim 1.

The invention also includes a tire having an electronic communication device with the features of claim 15.

Other features of the invention will be apparent from the dependent claims.

The invention will be better understood by reference to the following detailed description in conjunction with the appended drawings.

### BRIEF DESCRIPTION OF THE DRAWING FIGURES

Figure 1 is an illustration of an electrical device and antenna in accordance with the invention;

Figures 2a and 2b are drawings of two alternative embodiments of an electrical device and antenna in accordance with the invention; and

Figure 3 is a perspective view of a tire showing two placements for an electrical device with an antenna.

### DETAILED DESCRIPTION

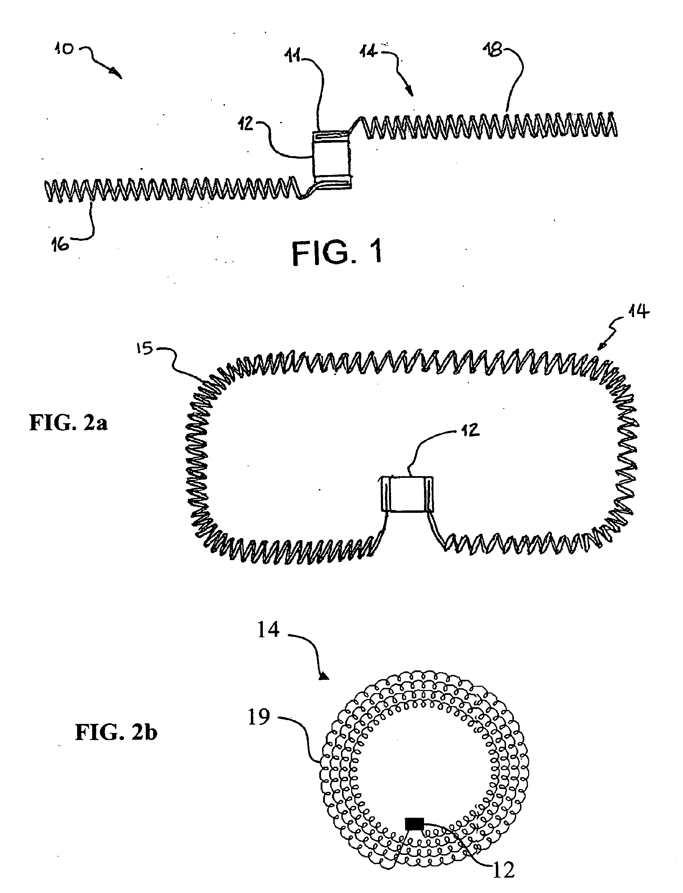

Figure 1 shows an electronics device 10 for a tire which includes a radio device 12 and an antenna 14 in accordance with one embodiment of the invention. The figures are not drawn to scale; certain features are enlarged for convenience. The electronics device 10 itself may be an identification or tracking device, such as may be used in manufacturing, distribution, and sale activities. The device 10 may also be or include a monitoring device for measuring temperature, pressure or other physical parameters in an operating tire. The radio device 12 is used to transmit information from the electronics device to a remote reader (not illustrated) external of the tire, and/or to receive information from the remote device.

The antenna 14 is used to transmit information to and/or receive it from the external device by radio frequency. In addition, the antenna may also serve to receive energy from an interrogation device. Such radio devices may operate as receivers, transmitters, transponders or reflectors, and, because the antenna of the invention is useful for all these devices, in the following description, the term "radio device" is intended to be inclusive.

The antenna 14 is shown as a dipole, having two branches 16, 18 extending from the radio device in substantially opposite directions. The invention may advantageously be used with dipoles, monopoles, or multiple antennas as the transmission and space conditions require. The antenna 14 extends from the radio device and terminates at a distance from it. This antenna configuration is advantageous for relatively high frequency communication, for example, at frequencies at or above 130 Mhz.

As illustrated in Figure 2a and 2b, the antenna may be configured as a loop antenna 15. A single loop is shown in Figure 2a, although multiple loops may, of course, be formed (see Figure 2b, multiple loops antenna 19). This configuration is advantageous for communication at relatively lower frequencies than the antenna of Figure 1, for example, at about 13 MHz. Such antenna could also be used for transmitting data or energy at lower frequency, such as 125 kHz.

The antenna 14 is shaped in a helical spiral to provide some longitudinal extensibility in the direction along which the antenna extends from the radio device 12 and bending flexibility in the directions other than the longitudinal direction. The illustrated embodiment of Figure 1 shows a helically wound wire which is considered a preferred embodiment of the antenna 14.

The antenna 14 is shown connected to solder pads 11 on the radio device 12. Of course, other connections could be made according to the how the radio device is made.

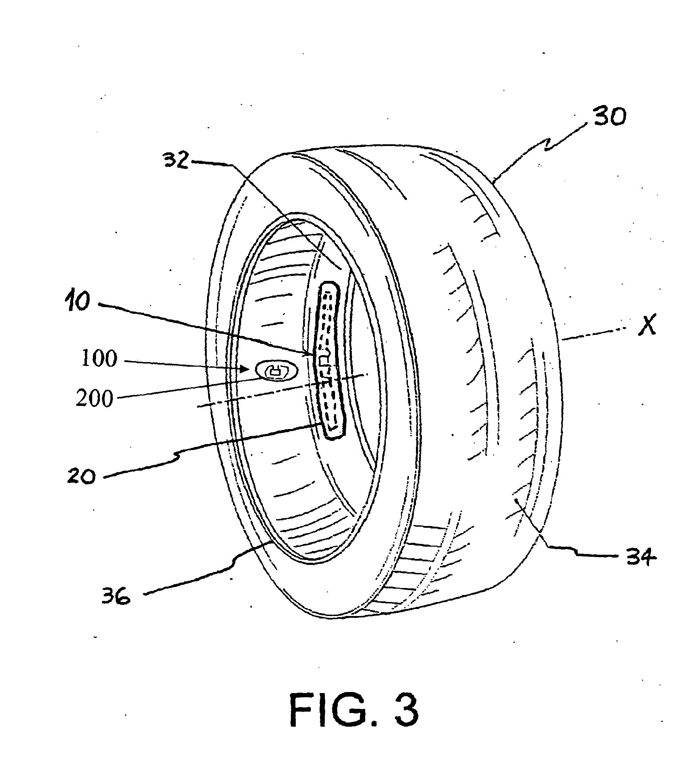

As shown in Figure 3, the radio device 12 and antenna 14 make a device 10 that can be advantageously positioned in a number of different places in a tire 30. In Figure 3, the device 10 is shown integrated in the sidewall 32 of the tire 30 and the device 100 is integrated in the crown 34. The electronics device 10 (100) may be applied under or embedded in a rubber patch 20 (200) which is adhered to a surface of the tire 30, as shown in Figure 3, on the inner surface of the sidewall 32 (inner surface of the crown 34). The position of the antenna 14 is indicated by the broken lines. The radio device 12 is shown exposed at the surface of the patch 20, but may itself also be embedded in the rubber. The electronics device 10 (100) will typically be cured in the patch. During this process, the patch rubber will flow into and fill the central portion of the antenna coil.

Alternatively, the radio device 12 and antenna 14 may be embedded in the tire structure itself or layered under rubber material in the tire 30 which forms a surface of the tire. For example, the radio frequency device 10 may be positioned between a carcass ply and an inner liner, between the carcass ply and the sidewall cover, and/or between the belt package and the tread. By "integrated" the inventor refers to any manner of incorporating the antenna 14 and radio device 12 in a tire in a way that positions the device and antenna on or in a surface of the tire. As in the patch, the rubber material will flow into and fill the antenna coil during the tire curing process.

A single tire may include one or several such devices, for example, if it is desired to monitor physical parameters at different locations in the tire or to monitor different parameters. The location for the device will depend, in part, on its function. For monitoring temperature or pressure, or for providing identification, the device may be placed on the sidewall 32 near the tire bead area 36 to avoid as far as possible experiencing flexing of the tire during rolling. If the device is monitoring a function or condition of the tread, the device would be placed in the crown 34.

Referring now again to Figures 1 and 2, those skilled in the tire art understand that a tire experiences significant deformation during the manufacturing process, from shaping from a cylindrical shape on the tire building drum to the familiar toroidal tire shape, and from pressure during curing. Also, during use of the tire, the sidewall and tread area undergo tensile and compressive forces as that portion of the tire moves into, through, and out of ground contact. A tensile force applied in the antenna 14 longitudinal direction will be absorbed by the spiral turns along the length of the antenna 14, permitting some extension along the length of the antenna. Length is understood to mean the general direction in which the antenna 14 extends from the radio device, which is substantially linear in Figure 1 and follows a looping course in Figure 2. This extensibility helps prevent damage or breakage of the antenna 14 when tension is applied, and is a significant advantage for an antenna attached to a tire.

In addition, the shape of the antenna 14 allows it to bend easily. If integrated in the sidewall 32 of the tire as shown in Figure 3, the device 10 will experience bending in the tire's axial direction X as the sidewall 32 bulges when in ground contact. Also, the device 10 may experience some bending in the tire's radial direction as the sidewall 32 distorts to allow the crown to flatten into ground contact.

The antenna 14 may be formed of spring wire, spring steel, brass coated spring steel, spring brass or other copper alloys and coated steel. Such materials are capable of surviving the bending and flexing deformations typically experienced by the tire.

The size and configuration of the antenna 14 is selected according to the frequency at which it will operate and its environment. The number, diameter, and pitch of the coils will determine the overall length. As mentioned, a monopole or dipole configuration is useful for higher frequencies, and a loop configuration is useful at lower frequencies. The inventor has found that the extensibility and flexibility of the antenna allows a relatively small diameter wire to survive in the tire environment. For example, a brass-coated steel wire of 0.2 mm diameter which is formed as a helix of about 1.5 mm outer diameter has been successfully integrated and operated in a tire. The inventor believes that wire diameters of 0.05 to 0.25 mm and helixes of 0.5 mm to 2 mm outside diameter will function successfully in the tire environment.

In a first preferred embodiment as presented in Fig. 1, the antenna is a dipole antenna with two parts, the length of each part being not more than 50 mm. In this embodiment, the associated radio device is operable at a frequency around 900 MHz or more. This can be a RFID for example.

The antenna may also be a monopole antenna with a length of 100 mm at most.

In a second preferred embodiment as also presented in Fig. 1, the antenna is a dipole antenna with two parts, the length of each part being not than 100 mm and more preferably aproximatevely 70 mm when embedded in rubber. In this embodiment, the associated radio device is operable at a frequency around 433 MHz. and for example can be a surface acoustic wave device.

In addition, the antenna will be tuned to compensate for being embedded in a tire. Typically, this requires shortening the antenna from the free-air tuned length. Tuning may be accomplished through iterations of embedding an antenna in rubber and testing. Alternatively, a network analyzer could be used to determine the actual resonant frequency of the antenna embedded in the particular rubber to reduce the iterations required to find the optimum length. Alternatively, the antenna could be adjusted by adding a tuning reactance in or attached to the device at the feedpoint.

Because the rubber in a tire has some electrical conductivity from carbon black, a coating layer is provided on the antenna to insulate the wire from the tire rubber. The coating is formed of an insulating material and is sufficiently thick to provide spacing between the conductive elastomeric material and the antenna 14 for avoiding bleed-through discharges to the elastomeric material. According to a preferred embodiment, the coating is at least 0.02 mm thick in the uncured state as measured perpendicular to the antenna. This thickness represents an average thickness for the antenna body, which may be determined, for example, by measurement of the volume of material applied to the antenna. According to the invention, the coating material has a dielectric constant less than that of the elastomeric material, and preferably less than 3. In addition, the coating material preferably has a surface resistivity of at least 10¹² ohms/sq and a volume resistivity of at least 10⁹ ohms*cm. Further, the coating material preferably has a dissipation factor less than 0.5. The coating material will provide an improvement in the transmission range, and as will be understood below, those skilled in the art may select the coating material and thickness to provide the range necessary for the particular conditions under which the device will be read.

Materials useful for forming the coating material to include electrical shrink tubing, thermoplastic polycarbonate, butadiene rubber, low carbon rubber (low carbon being defined to be a rubber mixture having less than 10% carbon black by weight) or silica reinforced rubber, an isocyanate-based rubber to metal adhesive such as Chemlok (brand) TS3604-50 adhesive (available from Lord Corporation, Chemical Products Division, 2000 West Grand View Boulevard, Erie, Pennsylvania), polyethylene, insulating varnish, epoxy, TPE cellulose acetate, polypara-xylylene (commonly known as "parylene"), and insulating polyester varnish. Such materials have certain advantages, including the ability to apply in the needed thickness. In addition, these coating materials have good adherence with both the antenna material (brass or steel in the described embodiment) and the rubber material of the tire or patch. Thus, an additional adhesive coating or layer is not needed.

Alternatively, the antenna may be embedded directly in a rubber material having appropriate electrical properties, that is, a surface resistivity of at least 10¹² ohms/sq, a volume resistivity of at least 10⁹ ohms*cm, and a dissipation factor less than 0.5.

To integrate the device in a tire, the device 10 (100) may be first embedded in a rubber layer. Preferably, the rubber layer is electrically non-conductive to avoid transmission interference. The rubber layer may be placed in the tire sidewall 32 between the exterior sidewall rubber and casing plies, for example. Preferably, the device 10 is oriented so that the antenna 14 is perpendicular to the reinforcing cords in the casing to avoid interference.

The rubber layer may be a patch 20 or 200 as illustrated in Figure 3 which is adhered to the inner sidewall 32 (respectively crown) surface by known means.

The invention has been described in terms of preferred principles, embodiments, and structures for the purposes of description and illustration. Those skilled in the art will understand that substitutions may be made and equivalents found without departing from the scope of the invention as defined by the appended claims.

## Claims

1. An improved electronic communication device (10, 100) for a tire (30) of a vehicle, comprising a radio device (12) for communicating information from the tire to a remote radio receiver, and at least a first antenna wire (14, 15, 16, 18, 19) connected to and extending from said radio device (12), the at least first antenna wire (14, 15, 16, 18, 19) being formed with a plurality of helical turns, **characterised in that** the at least first antenna wire (14, 15, 16, 18, 19) is coated with an electrically insulating material having a surface resistivity of at least 10¹² ohms/sq, and a volume resistivity of at least 10⁹ ohms*cm to isolate it from the tire rubber.

2. An improved electronics device (10, 100) as claimed in claim 1, wherein the electrically insulating material has a dissipation factor less than 0,5.

3. The improved electronics device (10, 100) as claimed in one of claims 1 and 2, wherein the coating is at least 0,02 mm thick.

4. The improved electronics device (10, 100) as claimed in one of claims 1 to 3, wherein the coating material is selected from a group comprising electrical shrink tubing, thermoplastic polycarbonate, butadiene rubber, low carbon rubber, isocyanate based adhesive, Polyethylene, insulating varnish, epoxy, TPE cellulose acetate, parylene, and insulating polyester varnish.

5. The improved electronics device (10, 100) as claimed in one of claims 1 to 4, wherein the radio device (12) is also coated with an electrically insulating material.

6. The improved electronics device (10, 100) as claimed in one of claims 1 to 5, wherein the antenna (14, 16, 18) is formed as one of a monopole or a dipole and terminates at a distance from the radio device (12).

7. The improved electronics component assembly (10, 100) as claimed in claim 6, wherein the radio device (12) is operable at a frequency of at least 130 MHz.

8. The improved electronics device (10, 100) as claimed in one of claims 6 and 7, wherein the length of the antenna (14, 16, 18) is under 100 mm.

9. The improved electonics device as claimed in claim 8, wherein the antenna (14, 16, 18) is a dipole antenna with two parts of length under 50 mm.

10. The improved electronics device (14, 15, 19) as claimed in one of claims 1 to 5, wherein the antenna is formed as one or more loops.

11. The improved electronics device (10, 100) as claimed in claim 10, wherein the radio device (12) is operable at a frequency of about 13 MHz or less.

12. The improved electronics component assembly (10, 100) as claimed in one of claims 1 to 11, further comprising a layer of rubber surrounding the antenna and radio device.

13. The improved electronics device (10) as claimed in claim 12, wherein the layer of rubber material forms a patch (20) for mounting the device to a sidewall (32) of a tire (30), the layer of rubber material having a mating side carrying an adhesive material.

14. The improved electronics device (10, 100) as claimed in one of claims 1 to 13, wherein the antenna (14, 15, 16, 18, 19) is formed from a wire having a diameter of 0.15 to 0.22 mm and coiled in a helix having an outside diameter of 0.5 to 2 mm.

15. A tire (30) having an electronic device (10), the tire comprising a crown region (34) and sidewalls (32) extending radially inward from the crown and terminating in beads (36), the tire further comprising a radio device (12) for communicating information from the tire to a remote radio receiver and at least a first antenna wire (14, 15, 16, 18, 19) connected to and extending from said radio device (12), the antenna (14, 15, 16, 18, 19) being formed with a plurality of helical turns, **characterised in that** the radio device (12) and antenna (14, 15, 16, 18, 19) are integrated into the tire with a coating of electrically non-conductive material having a surface resistivity of at least 10¹² ohms/sq, and a volume resistivity of at least 10⁹ ohms*cm surrounding the at least first antenna wire.

16. A tire 30 having an electronic device (10) as claimed in claim 15 wherein the electrically non-conductive material has a dissipation factor less than 0,5.

17. A tire (30) having an electronic device (10) as claimed in any one of claims 15 and 16, wherein said radio device (12) and antenna (14, 15, 16, 18, 19) are integrated into a sidewall (32) of the tire.

18. A tire (30) having an electronic device (10) as claimed in any one of claims 15 and 16, wherein said radio device (12) and antenna (14, 15, 16, 18, 19) are integrated into the crown (34) of the tire.

## Patentansprüche

1. Verbesserte elektronische Kommunikationsvorrichtung (10, 100) für einen Reifen (30) eines Fahrzeugs, die eine Funkvorrichtung (12) für die Kommunikation von Informationen von dem Reifen zu einem entfernten Funkempfänger und wenigstens einen ersten Antennendraht (14, 15, 16, 18, 19), der mit der Funkvorrichtung (12) verbunden ist und sich hiervon erstreckt, umfasst, wobei der wenigstens eine erste Antennendraht (14, 15, 16, 18, 19) mit mehreren schraubenlinienförmigen Windungen ausgebildet ist, **dadurch gekennzeichnet, dass** der wenigstens eine erste Antennendraht (14, 15, 16, 18, 19) mit einem elektrisch isolierenden Material beschichtet ist, das einen spezifischen elektrischen Oberflächenwiderstand von wenigstens 10¹² Ohm/Quadrat und einen spezifischen elektrischen Volumenwiderstand von wenigstens 10⁹ Ohm × cm besitzt, um ihn von dem Reifengummi zu isolieren.

2. Verbesserte elektronische Vorrichtung (10, 100) nach Anspruch 1, wobei das elektrisch isolierende Material einen Verlustfaktor von weniger als 0,5 besitzt.

3. Verbesserte elektronische Vorrichtung (10, 100) nach einem der Ansprüche 1 und 2, wobei die Beschichtung eine Dicke von wenigstens 0,02 mm besitzt.

4. Verbesserte elektronische Vorrichtung (10, 100) nach einem der Ansprüche 1 bis 3, wobei das Beschichtungsmaterial aus der Gruppe gewählt ist, die einen elektrischen Schrumpfschlauch, thermoplastisches Polycarbonat, Butadiengummi, kohlenstoffarmen Gummi, einen Klebstoff auf Isocyanatbasis, Polyethylen, Isolierlack, Epoxid, TPE-Zelluloseacetat, Parylen und isolierenden Polyesterlack umfasst.

5. Verbesserte elektronische Vorrichtung (10, 100) nach einem der Ansprüche 1 bis 4, wobei die Funkvorrichtung (12) ebenfalls mit einem elektrisch isolierenden Material beschichtet ist.

6. Verbesserte elektronische Vorrichtung (10, 100) nach einem der Ansprüche 1 bis 5, wobei die Antenne (14, 16, 18) als Monopol oder als Dipol ausgebildet ist und in einem Abstand von der Funkvorrichtung (12) endet.

7. Verbesserte Elektronikkomponentenanordnung (10, 100) nach Anspruch 6, wobei die Funkvorrichtung (12) mit einer Frequenz von wenigstens 130 MHz betreibbar ist.

8. Verbesserte elektronische Vorrichtung (10, 100) nach einem der Ansprüche 6 und 7, wobei die Länge der Antenne (14, 16, 18) unter 100 mm liegt.

9. Verbesserte elektronische Vorrichtung nach Anspruch 8, wobei die Antenne (14, 16, 18) eine Dipolantenne mit zwei Teilen mit einer Länge unter 50 mm ist.

10. Verbesserte elektronische Vorrichtung (14, 15, 19) nach einem der Ansprüche 1 bis 5, wobei die Antenne als eine oder mehrere Schleifen ausgebildet ist.

11. Verbesserte elektronische Vorrichtung (10, 100) nach Anspruch 10, wobei die Funkvorrichtung (12) mit einer Frequenz von etwa 13 MHz oder weniger betreibbar ist.

12. Verbesserte Elektronikkomponentenanordnung (10, 100) nach einem der Ansprüche 1 bis 11, die ferner eine Gummischicht umfasst, die die Antenne und die Funkvorrichtung umgibt.

13. Verbesserte elektronische Vorrichtung (10) nach Anspruch 12, wobei die Schicht aus Gummimaterial einen Flecken (20) für die Montage der Vorrichtung an einer Seitenwand (32) eines Reifens (30) bildet, wobei die Schicht aus Gummimaterial eine anschmiegende Seite besitzt, die ein Klebstoffmaterial trägt.

14. Verbesserte elektronische Vorrichtung (10, 100) nach einem der Ansprüche 1 bis 13, wobei die Antenne (14, 15, 16, 18, 19) aus einem Draht mit einem Durchmesser von 0,15 bis 0,22 mm gebildet ist und zu einer Schraubenlinie mit einem Außendurchmesser von 0,5 bis 2 mm gewickelt ist.

15. Reifen (30), der eine elektronische Vorrichtung (10) besitzt, wobei der Reifen einen Laufflächenbereich (34) und Seitenwände (32), die sich von der Lauffläche radial einwärts erstrecken und in Wulsten (36) enden, umfasst, wobei der Reifen ferner eine Funkvorrichtung (12) für die Kommunikation von Informationen von dem Reifen zu einem entfernten Funkempfänger und wenigstens einen ersten Antennendraht (14, 15, 16, 18, 19), der mit der Funkvorrichtung (12) verbunden ist und sich hiervon erstreckt, umfasst, wobei die Antenne (14, 15, 16, 18, 19) mit mehreren schraubenlinienförmigen Windungen ausgebildet ist, **dadurch gekennzeichnet, dass** die Funkvorrichtung (12) und die Antenne (14, 15, 16, 18, 19) in den Reifen integriert sind, wobei eine Beschichtung aus einem elektrisch nicht leitenden Material mit einem spezifischen elektrischen Oberflächenwiderstand von wenigstens 10¹² Ohm/Quadrat und mit einem spezifischen elektrischen Volumenwiderstand von wenigstens 10⁹ Ohm × cm den wenigstens einen ersten Antennendraht umgibt.

16. Reifen (30) mit einer elektronischen Vorrichtung (10) nach Anspruch 15, wobei das elektrisch nicht leitende Material einen Verlustfaktor von weniger als 0,5 besitzt.

17. Reifen (30) mit einer elektronischen Vorrichtung (10) nach einem der Ansprüche 15 und 16, wobei die Funkvorrichtung (12) und die Antenne (14, 15, 16, 18, 19) in eine Seitenwand (32) des Reifens integriert sind.

18. Reifen (30) mit einer elektronischen Vorrichtung (10) nach einem der Ansprüche 15 und 16, wobei die Funkvorrichtung (12) und die Antenne (14, 15, 16, 18, 19) in die Lauffläche (34) des Reifens integriert sind.

## Revendications

1. Dispositif électronique amélioré (10, 100) de communication pour pneumatique (30) de véhicule, comprenant
un dispositif radio (12) qui envoie des informations depuis le pneumatique vers un récepteur radio situé à distance et
au moins un premier câble (14, 15, 16, 18, 19) d'antenne raccordé audit dispositif radio (12) et en débordant,
le ou les premiers câbles (14, 15, 16, 18, 19) d'antenne étant formés par plusieurs spires hélicoïdales,
**caractérisé en ce que**
le ou les premiers câbles (14, 15, 16, 18, 19) d'antenne sont recouverts d'un matériau électriquement isolant qui les isole du caoutchouc du pneumatique et dont la résistivité de surface est d'au moins 10¹² ohms/sq et la résistivité volumique d'au moins 10⁹ ohms*cm.

2. Dispositif électronique amélioré (10, 100) selon la revendication 1, dans lequel le facteur de dissipation du matériau électriquement isolant est inférieur à 0,5.

3. Dispositif électronique amélioré (10, 100) selon l'une quelconque des revendications 1 et 2, dans lequel l'épaisseur du revêtement est d'au moins 0,02 mm.

4. Dispositif électronique amélioré (10, 100) selon l'une quelconque des revendications 1 à 3, dans lequel le matériau de revêtement est sélectionné dans un ensemble constitué des tubages électriques rétractables, des polycarbonates thermoplastiques, des caoutchoucs butadiène, des caoutchoucs contenant peu de carbone, des adhésifs à base d'isocyanate, du polyéthylène, des vernis isolants, des époxy, de l'acétate de cellulose TPE, du parylène et des vernis isolants au polyester.

5. Dispositif électronique amélioré (10, 100) selon l'une quelconque des revendications 1 à 4, dans lequel le dispositif radio (12) est aussi revêtu d'un matériau électriquement isolant.

6. Dispositif électronique amélioré (10, 100) selon l'une quelconque des revendications 1 à 5, dans lequel l'antenne (14, 16, 18) est formée comme monopôle ou comme dipôle et se termine à distance du dispositif radio (12).

7. Assemblage de composants électroniques amélioré (10, 100) selon la revendication 6, dans lequel le dispositif radio (12) peut fonctionner à une fréquence d'au moins 130 MHz.

8. Dispositif électronique amélioré (10, 100) selon l'une quelconque des revendications 6 et 7, dans lequel la longueur de l'antenne (14, 16, 18) est inférieure à 100 mm.

9. Dispositif électronique amélioré selon la revendication 8, dans lequel l'antenne (14, 16, 18) est une antenne dipôle dotée de deux pièces de longueur inférieure à 50 mm.

10. Dispositif électronique amélioré (14, 15, 19) selon l'une quelconque des revendications 1 à 5, dans lequel l'antenne est formée d'au moins une boucle.

11. Dispositif électronique amélioré (10, 100) selon la revendication 10, dans lequel le dispositif radio (12) peut fonctionner à une fréquence d'environ 13 MHz ou moins.

12. Assemblage de composants électroniques amélioré (10, 100) selon l'une quelconque des revendications 1 à 11, comprenant de plus une couche de caoutchouc qui entoure l'antenne et le dispositif radio.

13. Dispositif électronique amélioré (10) selon la revendication 12, dans lequel la couche de matériau de caoutchouc forme une plaquette (20) permettant de monter le dispositif sur une paroi latérale (32) d'un pneumatique (30), la couche de matériau de caoutchouc présentant un côté complémentaire qui porte un matériau adhésif.

14. Dispositif électronique amélioré (10, 100) selon l'une quelconque des revendications 1 à 13, dans lequel l'antenne (14, 15, 16, 18, 19) est formée d'un câble dont le diamètre est compris entre 0,15 et 0,22 mm et qui est spiralé en une hélice dont le diamètre externe est compris entre 0,5 et 2 mm.

15. Pneumatique (30) qui présente un dispositif électronique (10), le pneumatique comprenant une zone de couronne (34) et des parois latérales (32) qui s'étendent radialement vers l'intérieur de la couronne et qui se terminent en des bourrelets (36), le pneumatique comprenant de plus un dispositif radio (12) qui communique à un récepteur radio situé à distance une information provenant du pneumatique et au moins un premier câble d'antenne (14, 15, 16, 18, 19) raccordé audit dispositif radio (12) et en débordant, l'antenne (14, 15, 16, 18, 19) étant formée de plusieurs spires hélicoïdales, **caractérisé en ce que** le dispositif radio (12) et l'antenne (14, 15, 16, 18, 19) sont intégrés dans le pneumatique, un revêtement constitué d'un matériau électriquement non conducteur dont la résistivité de surface est d'au moins 10¹² ohms/sq et dont la résistivité de volume est d'au moins 10⁹ ohms*cm entourant le ou les premiers câbles d'antenne.

16. Pneumatique (30) qui présente un dispositif électronique (10) selon la revendication 15, dans lequel le facteur de dissipation du matériau électriquement non conducteur est inférieur à 0,5.

17. Pneumatique (30) doté d'un dispositif électronique (10) selon l'une quelconque des revendications 15 et 16, dans lequel ledit dispositif radio (12) et l'antenne (14, 15, 16, 18, 19) sont intégrés dans une paroi latérale (32) du pneumatique.

18. Pneumatique (30) doté d'un dispositif électronique (10) selon l'une quelconque des revendications 15 et 16, dans lequel ledit dispositif radio (12) et l'antenne (14, 15, 16, 18, 19) sont intégrés dans la couronne (34) du pneumatique.
